# EUROPÄISCHE PATENTSCHRIFT

(11) **EP 2 324 227 B1**
(45) Veröffentlichungstag und Bekanntmachung des Hinweises auf die Patenterteilung: **05.06.2013**
(21) Anmeldenummer: 09781370.3
(22) Anmeldetag: 31.07.2009
(51) Int. Cl.: F02M 25/07, F01P 3/20, F28D 7/16, F28F 13/06, F01N 5/00

(54) **ABGASKÜHLUNG FÜR EIN KRAFTFAHRZEUG**
EXHAUST-GAS COOLING FOR A MOTOR VEHICLE
SYSTÈME DE REFROIDISSEMENT DES GAZ D'ÉCHAPPEMENT D'UN VÉHICULE AUTOMOBILE

(30) Priorität: 12.08.2008 DE 102008038629
(43) Veröffentlichungstag der Anmeldung: 25.05.2011
(73) Patentinhaber: Behr GmbH & Co. KG, 70469 Stuttgart (DE)
(72) Erfinder: HOLDENRIED, Jens, 71254 Ditzingen (DE); NEHER, Stefan, 73084 Salach (DE)
(74) Vertreter: Grauel, Andreas
(86) Internationale Anmeldenummer: PCT/EP2009/059970
(87) Internationale Veröffentlichungsnummer: WO 2010/018083

(56) Entgegenhaltungen:
- EP-A- 1 148 231
- WO-A-2005/064133
- WO-A-2007/135021
- DE-A1- 19 633 190
- FR-A- 2 883 807
- US-A1- 2007 006 991

## Beschreibung

Die Erfindung betrifft einen Abgaskühler für ein Kraftfahrzeug nach dem Oberbegriff des Anspruchs 1.

Abgaskühler zur Kühlung von rückgeführtem Abgas sind insbesondere zum Zweck der Schadstoffreduzierung verbreitet im Einsatz. Zumeist werden Abgaskühler in Verbindung mit Dieselmotoren eingesetzt, jedoch gibt es inzwischen auch Applikationen für die Abgaskühlung von Ottomotoren.

EP 1 683 956 A1 beschreibt einen Kühler für rückgeführtes Abgas eines Verbrennungsmotors, bei dem ein Bündel von Tauscherrohren in einem kühlmitteldurchströmten Gehäuse angeordnet ist. Das Kühlmittel tritt in der Nähe eines Eintritts des Abgases in das Gehäuse ein und in der Nähe des Austritts eines Abgases aus dem Gehäuse wieder aus. Dem Eintritt des Kühlmittels gegenüberliegend ist ein Abführstutzen von kleinem Durchmesser vorgesehen, über den ein kleiner Teilstrom des Kühlmittels austritt, um eine Strömungsstagnation des Kühlmittels im Eintrittsbereich der Tauscherrohre zu verhindern.

Solche und andere bekannte Abgaskühler sind regelmäßig in einen Nebenstrom bzw. in einen zu einem Verbrennungsmotor parallelen Zweig eines Hauptkühlkreislaufes des Kraftfahrzeugs eingebunden. Somit werden die Gehäuse der bekannten Abgaskühler nur von einem kleinen Bruchteil des gesamten umgewälzten Kühlmittels durchströmt.

Die WO 2007/135021 A1 beschreibt einen Abgaskühler, der in selben Kühlkreis wie die Brennkraftmaschine angeordnet ist. Er ist aus zwei parallelen Kühlrohranordnungen aufgebaut, zwischen welchen mittels eines Kühlmittelventils das Kühlmittel aufgebeilt werden kann.

Es ist die Aufgabe der Erfindung, einen Abgaskühler anzugeben, der bei guter Kühlleistung besonders einfach in einen Kühlkreislauf integrierbar ist.

Diese Aufgabe wird für einen eingangs genannten Abgaskühler erfindungsgemäß mit den kennzeichnenden Merkmalen des Anspruchs 1 gelöst. Durch die Anordnung des Abgaskühlers in Reihe zu dem Verbrennungsmotor erübrigt sich der aufwendige Abzweig eines Parallel-Zweigs bzw. Nebenstroms. Grundsätzlich ist hierdurch zudem die Möglichkeit gegeben, eine verbesserte Kühlung des Abgases zu gewährleisten, da dem Abgaskühler grundsätzlich ein erheblich höherer Kühlmittelstrom zur Verfügung steht. Je nach Anforderungen wird hierdurch zudem ermöglicht, dass eine gleich oder sogar verbesserte Kühlleistung gegenüber dem Stand der Technik mit einer höheren Kühlmitteltemperatur erzielbar ist.

Erfindungsgemäß ist vorgesehen, dass ein erster und ein zweiter Austritt für das Kühlmittel vorgesehen sind, wobei ein erster Teilstrom des durch den Eintritt einströmenden Kühlmittels durch den ersten Austritt ausströmt und ein zweiter Teilstrom des durch den Eintritt einströmenden Kühlmittels durch den zweiten Austritt ausströmt. Hierdurch wird auf einfache Weise der durch die Anordnung im Kühlkreislauf bedingte größere Kühlmittelstrom auf zwei Teilströme verzweigt, wobei insgesamt ein größerer Massenstrom durch den Wärmetauscher ermöglicht ist. Dabei durchströmt der erste Teilstrom im Wesentlichen senkrecht zu den Tauscherrohren als Strömungsweg die kurze Querseite des Gehäuses, und der zweite Teilstrom durchströmt die Längsrichtung des Gehäuses parallel zu den Tauscherrohren.

In bevorzugter Detailgestaltung sind dabei der erste Austritt und der Eintritt für das Kühlmittel jeweils an dem Eintrittsbereich des Strömungsweges angeordnet. Insbesondere bevorzugt kann es dabei vorgesehen sein, dass der erste Teilstrom zumindest bei einem Normalbetrieb des Abgaskühlers (mittlere Last und Drehzahl des Verbrennungsmotors) größer als der zweite Teilstrom ist. Der erste Teilstrom strömt entsprechend bevorzugt vom Eintritt über einen kurzen Weg quer durch das Gehäuse zu dem ersten Austritt und stellt einen erheblichen Anteil des gesamten Massenstroms des Kühlmittels im Hauptkühlkreislauf dar. Hierdurch kann gerade der kritische Eintrittsbereich des heißen Abgases in den Strömungsweg besonders effektiv gekühlt werden, wobei ein Sieden des Kühlmittels aufgrund ungünstiger Strömungsverhältnisse wirkungsvoll vermieden wird. Der zweite Teilstrom kann bevorzugt im Wesentlichen parallel zu dem Strömungsweg verlaufen, wodurch auf bekannte Weise ein effektiver Wärmeübertrag von dem Abgas auf den zweiten Teilstrom erfolgt.

Bei einer vorteilhaften Ausführungsform der Erfindung ist es vorgesehen, dass der erste Austritt mittels einer insbesondere mit dem Gehäuse integriert ausgebildeten Kanalführung zu dem zweiten Austritt geführt ist, so dass insgesamt nur ein einziger Austrittsanschluss zur Abführung des Kühlmittels von dem Abgaskühler vorgesehen ist. Hierdurch kann eine kompakte Bauform mit besonders wenigen äußeren Anschlüssen und Schläuchen realisiert werden.

Zur Sicherstellung von ausreichenden Kühlmittel-Teilströmen bei unterschiedlicher Last und Drehzahl des Verbrennungsmotors kann ein Regelglied vorgesehen sein, mittels dessen eine Verteilung des gesamten Kühlmittelstroms auf den ersten und den zweiten Teilstrom veränderbar ist. So kann z. B. bei Leerlaufdrehzahl ein größerer Anteil auf den zweiten Teilstrom entfallen, wobei zumindest bei hohen Drehzahlen und einem normalen Fahrbetrieb der dann hohe Kühlmiltelmassenstrom zum überwiegenden Anteil über den ersten Teilstrom geführt wird. In bevorzugter Detailgestaltung kann das Regelglied als passives, insbesondere federbelastetes Drosselglied ausgebildet sein. Ein solches kann z. B. vorteilhaft im Bereich des ersten Austritts nach Art eines federbelasteten Ventilschiebers vorgesehen sein, so dass der erste Austritt mit zunehmender Motordrehzahl und zunehmendem Druckanstieg des Kühlmittelstroms weiter öffnet, wobei zugleich bei niedriger Drehzahl durch die Drosselung des ersten Austritts ein ausreichend großer zweiter Teilstrom zur Kühlung des Abgases gegeben ist. In je nach Anforderungen alternativer Ausführung kann es sich bei dem Regelglied auch um ein aktives, insbesondere ansteuerbares Stellglied handeln. Dies kann als Stellklappe oder auch als verstellbarer Drosselquerschnitt oder auf ähnliche Weise ausgebildet sein und mittels eines Aktuators betätigt werden, In Verbindung mit einer Steuerelektronik des Fahrzeugs kann hierdurch eine besonders optimierte Verteilung des Kühlmittelstroms auf die beiden Teilströme erfolgen.

Allgemein vorteilhaft ist der Abgaskühler von einer Bauart, bei der der Strömungsweg für das Abgas als Bündel von Tauscherrohren ausgebildet ist, Derartige Abgaskühler sind robust und günstig herstellbar und finden nach diesem Bauprinzip verbreitete Anwendung.

Weiterhin kann es vorgesehen sein, dass eine Bypassleitung zur Führung eines Teils des gesamten Kühlmittelstroms parallel zu dem Abgaskühler geführt ist. Eine solche Bypassleitung kann Insbesondere bei sehr hohen Kühlmittelströmen sinnvoll sein, um grundsätzlich einen Teil des Kühlmittels um den gesamten Abgaskühler herumzuführen. Hierdurch kann eine unnötige Überdimensionierung der Ein- oder Austritte und des Gehäuses des Abgaskühlers vermieden werden, wobei der Abgaskühler jedoch insgesamt seriell in dem Hauptkühlkreislauf angeordnet ist.

Weitere Vorteile und Merkmale der Erfindung ergeben sich aus den nachfolgend beschriebenen Ausführungsbeispielen sowie aus den abhängigen Ansprüchen.

Nachfolgend werden mehrere Ausführungsbeispiele der Erfindung anhand der anliegenden Zeichnungen näher erläutert.
- Fig. 1: zeigt eine schematische Schnittansicht eines Abgaskühlers gemäß einem ersten Ausführungsbeispiel der Erfindung.
- Fig. 2: zeigt eine Abwandlung des Ausführungsbeispiels aus Fig. 1.
- Fig. 3: zeigt ein weiteres Ausführungsbeispiel eines erfindungsgemäßen Abgaskühlers.
- Fig. 4: zeigt eine schematische Ansicht eines Kühlkreislaufs mit einem erfindungsgemäßen Abgaskühler.

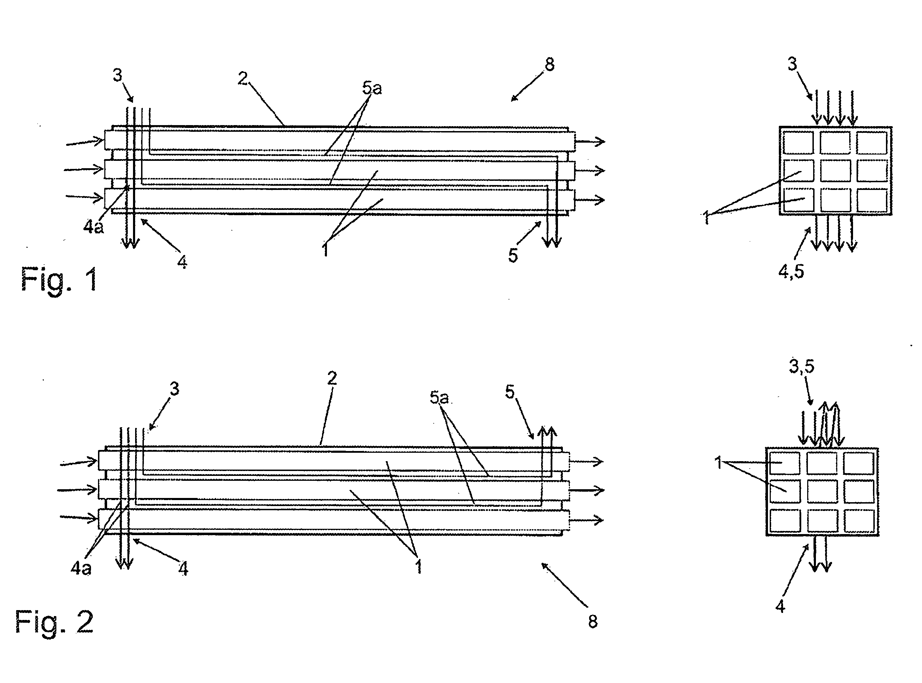

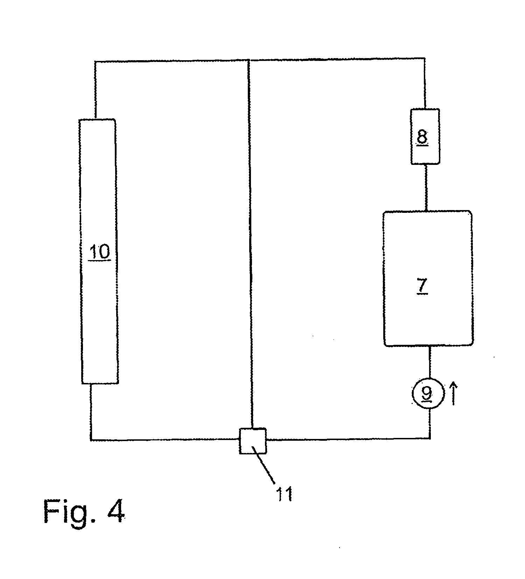

Bei dem in Fig. 1 gezeigten ersten Ausführungsbeispiel eines Abgaskühlers ist ein als Bündel von Tauscherrohren 1 ausgebildeter Strömungsweg für Abgas eines Verbrennungsmotors 7 (siehe Fig. 4) in einem Gehäuse 2 angeordnet, wobei das Gehäuse 2 zur Kühlung des in den Rohren 1 geführten Abgases von einem flüssigen Kühlmittel eines Hauptkühlkreislaufs des Verbrennungsmotors durchströmt wird.

Das Kühlmittel tritt durch einen im Bereich des Eintritts des Abgases an dem Gehäuse 2 angeordneten Eintritt 3 In das Gehäuse 2 ein. Den Eintritt 3 hin zu den Tauscherrohren 1 senkrechter Richtung gegenüberliegend ist ein erster Austritt 4 vorgesehen. Am in Längsrichtung der Rohre 1 gegenüberliegenden Austrittsbereich der Tauscherrohre 1 ist ein zweiter Austritt 5 angeordnet.

Wie durch die Strömungspfeile in der Zeichnung Fig. 1 verdeutlicht, verzweigt der durch den einzigen Eintritt 3 eintretende Kühlmittelstrom in einen ersten Teilstrom 4a und in einen zweiten Teilstrom 5a, wobei der erste Teilstrom 4a im Wesentlichen senkrecht zu den Tauscherrohren 1 die kurze Querseite des Gehäuses 2 durchströmt und der zweite Teilstrom 5a die Längsrichtung des Gehäuses 2 parallel zu den Tauscherrohren 1 durchströmt. Eine räumlich getrennte Führung der Teilströme innerhalb des Gehäuses besteht dabei nicht. Allerdings können Führungsbleche oder ähnliche Maßnahmen vorgesehen sein, um Aufteilung und Verlauf der Teilströme zu optimieren.

Der Abgaskühler 8 ist in dem Hauptkühlkreislauf des Verbrennungsmotors 7 seriell zu dem Verbrennungsmotor angeordnet (siehe Fig. 4), so dass ein erheblicher Kühlmittelstrom durch ihn durchtritt. Im vorliegenden Beispiel handelt es sich um einen Abgaskühler zur Verwendung mit einem mittelgroßen Dieselmotor eines Nutzkraftwagens im Leistungsbereich von etwa 200 kW. Der typische Kühlkreislauf eines solchen Verbrennungsmotors fördert rund 5-10 Liter Kühlmittel pro Sekunde. Im vorliegenden Ausführungsbeispiel tritt diese gesamte Kühlmittelmenge durch den Abgaskühler hindurch. Dabei entfällt zumindest bei höheren Drehzahlen der überwiegende Teil des Kühlmittelstroms auf den ersten Teilstrom 4a. Je nach Drehzahl beträgt der erste Teilstrom typisch 5 l/s, wozu Eintrittsöffnung 3 und erste Austrittsöffnung 4 entsprechend dimensioniert sind.

Der auf den zweiten Teilstrom 5a entfallende Anteil an Kühlmittel ist niedriger und beträgt bei üblichen Betriebsbedingungen wie mittlerer Drehzahl und Last typisch 1-2 l/s.

Es wird deutlich, dass der große Kühlmitteldurchsatz des ersten Teilstroms 4a eine besonders gute Kühlung der Tauscherrohre in ihrem Eintrittsbereich in das Gehäuse mit sich bringt, so dass ein Sieden des Kühlmittels im Bereich der dort noch besonders heißen Abgase wirkungsvoll vermieden ist.

Um ein erforderliches Minimum des zweiten Teilstroms über einen weiten Drehzahlbereich sicher zu stellen ist es vorgesehen, dass in dem ersten Austritt 4 ein (nicht dargestelltes) Drosselventil angeordnet ist, das über einen federbelasteten Schieber eine passive Steuerung des Querschnitts des ersten Austritts 4 bewirkt. Bei zunehmender Drehzahl steigt der Druck des Kühlmittelstroms auf das federbelastete Drosselventil und öffnet dieses zunehmend, so dass die Größe des ersten Teilstroms bei zunehmender Drehzahl überproportional zu der Größe des zweiten Teilstroms zunimmt.

In Fig. 2 ist eine Abwandlung des ersten Ausführungsbeispiels gezeigt, bei der als einziger Unterschied der zweite Kühlmittelaustritt nicht auf einer dem Kühimitteleintritt gegenüberliegenden Seite des Gehäuses angeordnet ist, sondern auf der gleichen Gehäuseseite. Dies kann insbesondere bei entsprechenden Anforderungen an den Bauraum Vorteile bieten.

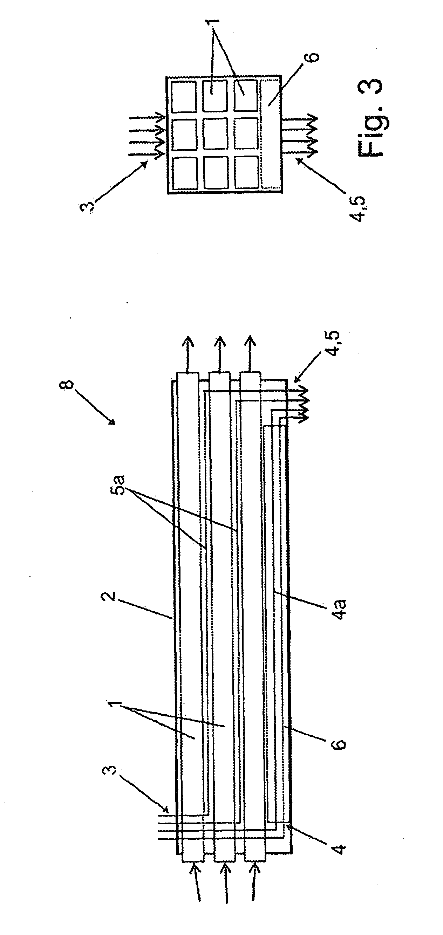

Fig. 3 zeigt ein weiteres Ausführungsbeispiel der Erfindung, bei dem insgesamt nur ein äußerer Anschluss für den Eintritt des Kühlmittels und ein äußerer Anschluss für den Austritt des Kühlmittels vorliegen. Dabei fällt der erste Austritt 4 mit dem Beginn einer in dem Gehäuse 2 integriert ausgebildeten Kanalführung 6 zusammen, welche sich im Bereich des zweiten Austritts 5 mit diesem vereinigt. Die Kanalführung 6 für das Kühlmittel gehört im Sinne der Erfindung somit nicht mehr zu dem Gehäuse 2 bzw. dem die Tauscherrohre umgebenden Raum, sondern stellt eine mit diesem integriert ausgebildete Leitung für das Kühlmittel dar, wodurch die Anzahl der äußeren Anschlüsse des Abgaskühlers verringert und die erforderliche Anzahl von Schlauchstücken zur Anbindung des Abgaskühlers an den Verbrennungsmotor verringert wird. Im erfindungsgemäßen Sinn weißt auch das Ausführungsbeispiel nach Fig. 3 zwei Austritte 4, 5 des Kühlmittels aus dem die Tauscherrohre umgebenden Raum auf.

Fig. 4 zeigt ein Beispiel für die Integration eines der zuvor beschriebenen Abgaskühler 8 in den Kühlkreislauf des Verbrennungsmotors. 7, der zudem eine Kühlmittelpumpe 9, einen Kühlmittelkühler 10 und ein Thermostatventil 11 umfasst.

Der Abgaskühler 8 ist dabei in Reihe mit dem Verbrennungsmotor 7 im Hauptstrom des Kühlmittelkreises angeordnet. Vorllegend ist der Abgaskühler dabei dem Verbrennungsmotor 7 in Richtung des Kühlmittelstroms nachgeordnet, so dass das den Abgaskühler durchströmende Kühlmittel eine besonders hohe Temperatur aufweist. Aufgrund der starken Umströmung des Eintrittsbereichs der Tauscherrohre 1 mit dem ersten Teilstrom 4a kann dennoch eine gleich gute Kühlung des Abgases sichergestellt werden. Je nach Anforderungen kann der Abgaskühler 8 natürlich auch dem Verbrennungsmotor 7 vorgeordnet sein.

Es versteht sich, dass die einzelnen Merkmale der verschiedenen Ausführungsbeispiele je nach Anforderungen sinnvoll miteinander kombiniert werden können.

## Patentansprüche

1. Kühlmittelkreis mit einem Abgaskühler für ein Kraftfahrzeug, umfassend einen von Abgas eines Verbrennungsmotors durchströmbaren Strömungsweg (1) mit einem Eintrittsbereich und einem Austrittsbereich für das Abgas, ein den Strömungsweg (1) umgebendes Gehäuse (2) mit zumindest einem Eintritt (3) und zumindest einem Austritt (4, 5) für ein flüssiges Kühlmittel eines Kühlmittelkreises, wobei der Strömungsweg (1) von dem Kühlmittel zur Kühlung des Abgases umströmbar ist, und wobei der Kühlmittelkreis als Hauptkühlkreislauf des Verbrennungsmotors (7) des Kraftfahrzeugs ausgebildet ist, wobei der Abgaskühler (8) in dem Hauptkühlkreislauf in Reihe zu dem Verbrennungsmotor angeordnet ist, wobei ein erster und ein zweiter Austritt für das Kühlmittel vorgesehen sind, wobei ein erster Teilstrom (4a) des durch den Eintritt (3) einströmenden Kühlmittels durch den ersten Austritt (4) ausströmt und ein zweiter Teilstrom (5a) des durch den Eintritt (3) einströmenden Kühlmittels durch den zweiten Austritt (5) ausströmt, **dadurch gekennzeichnet, dass** der erste Teilstrom im Wesentllchen senkrecht zu den Tauscherrohren als Strömungsweg (1) die kurze Querseite des Gehäuses durchströmt und der zweite Teilstrom die Längsrichtung des Gehäuses parallel zu den Tauscherrohren durchströmt.

2. Kühlmittelkreis nach Anspruch 1, **dadurch gekennzeichnet, dass** der erste Austritt (4) und der Eintritt (3) für das Kühlmittel jeweils an dem Eintrittsbereich des Strömungsweges (1) angeordnet sind.

3. Kühlmittelkreis nach Anspruch 1 oder 2, **dadurch gekennzeichnet, dass** der erste Teilstrom (4a) zumindest bei einem Normalbetrieb des Abgaskühlers (8) größer als der zweite Teilstrom (5a) ist.

4. Kühlmittelkreis nach einem der Ansprüche 1 bis 3, **dadurch gekennzeichnet, dass** der zweite Teilstrom (5a) im Wesentlichen parallel zu dem Strömungsweg (1) verläuft.

5. Kühlmittelkreis nach einem der Ansprüche 1 bis 4, **dadurch gekennzeichnet, dass** der erste Austritt (4) mittels einer Insbesondere mit dem Gehäuse (2) integrierten Kanalführung (6) zu dem zweiten Austritt (5) geführt ist, so dass insgesamt nur ein einziger Austrittsanschluss zur Abführung des Kühlmittels von dem Abgaskühler (8) vorgesehen ist.

6. Kühlmittelkreis nach einem der Ansprüche 1 bis 5, **dadurch gekennzeichnet, dass** ein Regelglied vorgesehen ist, mittels dessen eine Verteilung des gesamten Kühlmittelstroms auf den ersten und den zweiten Teilstrom (4a, 5a) veränderbar ist

7. Kühlmittelkreis nach Anspruch 6, **dadurch gekennzeichnet, dass** das Regelglied als passives, Insbesondere federbelastetes Drosselglied ausgebildet ist.

8. Kühlmittelkreis nach Anspruch 6, **dadurch gekennzeichnet, dass** das Regelglied als aktives, insbesondere ansteuerbares Stellglied ausgebildet ist.

9. Kühlmittelkreis nach einem der Ansprüche 6 bis 8, **dadurch gekennzeichnet, dass** das Regelglied im Bereich des ersten Austritts (4) angeordnet ist.

10. Kühlmittelkreis nach einem der vorhergehenden Ansprüche, **dadurch gekennzeichnet, dass** der Strömungsweg (1) für das Abgas als Bündel von Tauscherrohren (1) ausgebildet ist.

11. Kühlmittelkrels nach einem der vorhergehenden Ansprüche, **dadurch gekennzeichnet, dass** eine Bypassleitung zur Führung eines Teils des Kühlmittelstroms parallel zu dem Abgaskühler (8) geführt ist.

## Claims

1. A coolant circuit comprising an exhaust gas cooler for a motor vehicle, comprising a flow path (1), through which exhaust gas from an internal combustion engine can flow and which has an inlet region and an outlet region for the exhaust gas, a housing (2), which surrounds the flow path (1) and has at least one inlet (3) and at least one outlet (4, 5) for liquid coolant of a coolant circuit, wherein the coolant can flow around the flow path (1) so as to cool the exhaust gas, and wherein the coolant circuit is designed as the main cooling circuit of the internal combustion engine (7) of the motor vehicle, wherein the exhaust gas cooler (8) in the main cooling circuit is arranged in series to the internal combustion engine, wherein a first and a second outlet for the coolant are provided, wherein a first partial flow (4a) of the coolant entering through the inlet (3) exits through the first outlet (4) and a second partial flow (5a) of the coolant entering through the inlet (3) exits through the second outlet (5), **characterized in that** the first partial flow flows through the short transverse side of the housing in substantially perpendicular fashion relative to the exchanger tubes as the flow path (1) and the second partial flow flows through the longitudinal direction of the housing parallel to the exchanger tubes.

2. The coolant circuit according to claim 1, **characterized in that** the first outlet (4) and the inlet (3) for the coolant are each arranged at the inlet region of the flow path (1).

3. The coolant circuit according to claim 1 or 2, **characterized in that** the first partial flow (4a) is greater than the second partial flow (5a), at least during normal operation of the exhaust gas cooler (8).

4. A coolant circuit according to any one of claims 1 to 3, **characterized in that** the second partial flow (5a) runs substantially parallel to the flow path (1).

5. A coolant circuit according to any one of claims 1 to 4, **characterized in that**, by way of ducting (6) that is integrated in particular in the housing (2), the first outlet (4) is guided to the second outlet (5) so that overall only a single outlet connection for discharging the coolant from the exhaust gas cooler (8) is provided.

6. A coolant circuit according to any one of claims 1 to 5, **characterized in that** a control member is provided, by way of which a distribution of the entire coolant flow to the first and second partial flows (4a, 5a) can be varied.

7. The coolant circuit according to claim 6, **characterized in that** the control member is designed as a passive, in particular a spring-loaded, throttle member.

8. The coolant circuit according to claim 6, **characterized in that** the control member is designed as an active, in particular an actuatable, final control element.

9. A coolant circuit according to any one of claims 6 to 8, **characterized in that** the control member is arranged in the region of the first outlet (4).

10. A coolant circuit according to any one of the preceding claims, **characterized in that** the flow path (1) for the exhaust gas is designed as a bundle of exchanger tubes (1).

11. A coolant circuit according to any one of the preceding claims, **characterized in that** a bypass line for guiding a portion of the coolant flow is guided parallel to the exhaust gas cooler (8).

## Revendications

1. Circuit de moyen de refroidissement comportant un refroidisseur de gaz d'échappement pour un véhicule automobile, comprenant une trajectoire d'écoulement (1) pouvant être traversée par des gaz d'échappement d'un moteur à combustion interne, trajectoire d'écoulement comportant une zone d'entrée et une zone de sortie pour les gaz d'échappement, un carter (2) entourant la trajectoire d'écoulement (1), en ayant au moins une entrée (3) et au moins une sortie (4, 5) pour un moyen de refroidissement liquide d'un circuit de moyen de refroidissement, où la trajectoire d'écoulement (1) peut être baignée par le moyen de refroidissement servant au refroidissement des gaz d'échappement, et où le circuit de moyen de refroidissement est conçu comme le circuit de refroidissement principal du moteur à combustion interne (7) du véhicule automobile, où le refroidisseur de gaz d'échappement (8) est disposé, dans le circuit de refroidissement principal, en série par rapport au moteur à combustion interne, où il est prévu une première sortie et une deuxième sortie pour le moyen de refroidissement, où un premier flux partiel (4a) du moyen de refroidissement, entrant par l'entrée (3), sort par la première sortie (4), et un deuxième flux partiel (5a) du moyen de refroidissement, entrant par l'entrée (3), sort par la deuxième sortie (5), **caractérisé en ce que** le premier flux partiel traverse, comme trajectoire d'écoulement (1), le côté transversal court du carter, pratiquement de façon perpendiculaire aux tubes de l'échangeur, et le deuxième flux partiel traverse la direction longitudinale du carter, parallèlement aux tubes de l'échangeur.

2. Circuit de moyen de refroidissement selon la revendication 1, **caractérisé en ce que** la première sortie (4) et l'entrée (3) prévue pour le moyen de refroidissement sont disposées à chaque fois au niveau de la zone d'entrée de la trajectoire d'écoulement (1).

3. Circuit de moyen de refroidissement selon la revendication 1 ou 2, **caractérisé en ce que** le premier flux partiel (4a), au moins au cours d'un fonctionnement normal du refroidisseur de gaz d'échappement (8), est plus grand que le deuxième flux partiel (5a).

4. Circuit de moyen de refroidissement selon l'une quelconque des revendications 1 à 3, **caractérisé en ce que** le deuxième flux partiel (5a) s'étend pratiquement de façon parallèle à la trajectoire d'écoulement (1).

5. Circuit de moyen de refroidissement selon l'une quelconque des revendications 1 à 4, **caractérisé en ce que** la première sortie (4) est guidée jusqu'à la deuxième sortie (5), au moyen d'un guidage de conduit intégré (6) en particulier au carter (2), de sorte qu'il est prévu, au total, seulement un unique raccord de sortie pour l'évacuation du moyen de refroidissement provenant du refroidisseur de gaz d'échappement (8).

6. Circuit de moyen de refroidissement selon l'une quelconque des revendications 1 à 5, **caractérisé en ce qu'**il est prévu un organe de réglage au moyen duquel est modifiable, sur le premier et le deuxième flux partiel (4a, 5a), une répartition du flux du moyen de refroidissement total.

7. Circuit de moyen de refroidissement selon la revendication 6, **caractérisé en ce que** l'organe de réglage est conçu comme un organe d'étranglement passif, en particulier actionné par un ressort.

8. Circuit de moyen de refroidissement selon la revendication 6, **caractérisé en ce que** l'organe de réglage est conçu comme un actionneur actif, en particulier pilotable.

9. Circuit de moyen de refroidissement selon l'une quelconque des revendications 6 à 8, **caractérisé en ce que** l'organe de réglage est disposé dans la zone de la première sortie (4).

10. Circuit de moyen de refroidissement selon l'une quelconque des revendications précédentes, **caractérisé en ce que** la trajectoire d'écoulement (1) pour les gaz d'échappement est conçue comme un faisceau de tubes d'échangeur (1).

11. Circuit de moyen de refroidissement selon l'une quelconque des revendications précédentes, **caractérisé en ce qu'**une conduite de dérivation servant au guidage d'une partie du flux du moyen de refroidissement est guidée parallèlement au refroidisseur de gaz d'échappement (8).
